# EUROPÄISCHE PATENTANMELDUNG

(11) **EP 1 345 305 A2**
(43) Veröffentlichungstag der Anmeldung: **17.09.2003**
(21) Anmeldenummer: 02028576.3
(22) Anmeldetag: 20.12.2002
(51) Int. Cl.: H02J 13/00

(54) **Elektrische/elektronische Einrichtung**

(30) Priorität: 15.03.2002 DE 10211450
(71) Anmelder: Insta Elektro GmbH, 58511 Lüdenscheid (DE)
(72) Erfinder: Bunte, Matthias, Dipl.-Ing., 58511 Lüdenscheid (DE); Knoll, Ulrich, Dipl.-Ing., 57439 Atendorn (DE); Naurath, Dirk, Dipl.-Ing., 44797 Bochum (DE)

(57) **Zusammenfassung**

Es wird eine elektrische/elektronische Einrichtung vorgeschlagen, die mit einem Gehäuse versehen ist, in dessen Innenraum eine zumindest einen Mikrocontroller und einen Programmspeicher aufweisende Schaltungsanordnung untergebracht ist, wobei diese eine von außen zugängliche Chipkartenleseeinrichtung, eine Anzeigeeinrichtung sowie mehrere Bedienelemente aufweist. Zu dem Zweck, eine elektrische/elektronische Einrichtung zu schaffen, bei der auf einfache Art und Weise eine über den ursächlichen Funktionsumfang erheblich hinausgehende Funktionserweiterung besonders kostengünstig zu bewerkstelligen ist, weist der Programmspeicher eine erheblich größere, als für die Sicherstellung des einwandfreien Betriebes bei normalem Funktionsumfang notwendige Speicherkapazität auf und steht datentechnisch mit der Chipkartenleseeinrichtung und dem Mikrocontroller in Verbindung, wobei zumindest ein Teil des zu einem erweiterten Funktionsumfang notwendigen neuen Programms bzw. Zusatzprogramms auf einer Chipkarte abgelegt und über die Chipkartenleseeinrichtung in den Programmspeicher übertragbar ist.

## Beschreibung

Die vorliegende Erfindung geht von einer gemäß dem Oberbegriff des Hauptanspruches konzipierten elektrischen/elektronischen Einrichtung aus.

Derartige elektrische/elektronische Einrichtungen sind dafür vorgesehen, menügeführt von zentraler Stelle aus die Bedienung, Steuerung und/oder Regelung von Geräten bzw. Komponenten der Gebäudesystemtechnik wie z. B. Dimmer, Schalter, Temperaturregelventile, Rollosteuergeräte usw. auf komfortable Art und Weise vornehmen zu können. So kann auch bei größeren Installationen der Gebäudesystemtechnik die Bedienung, Steuerung und/oder Regelung der zugehörigen Teilnehmer auf einfache Art und Weise komfortabel vorgenommen werden.

Eine dem Oberbegriff des Hauptanspruches entsprechende elektrische/elektronische Einrichtung ist durch die DE 195 30 596 A1 bekannt geworden. Eine solche elektrische/elektronische Einrichtung ist für die zentrale Bedienung, Steuerung und/oder Regelung von Geräten bzw. Komponenten der Gebäudesystemtechnik vorgesehen. Zur Kommunikation innerhalb einer busgestützten Installation weist diese elektrische/elektronische Einrichtung einen Speicher auf, in den mittels der vorhandenen Chipkartenleseeinrichtung die auf einer eingeführten Chipkarte vorhandenen Daten eingelesen bzw. gespeichert werden können. Diese Daten können in verarbeiteter Form mit den der Installation zugehörigen Teilnehmern über die Busleitung ausgetauscht werden. Der zu diesem Zweck vorgesehene Speicher ist im Hinblick auf seine Speicherkapazität jedoch auf eine lediglich die Erfüllung der ursächlich vorgesehenen Funktionen erlaubende Größe abgestimmt und außerdem fest in den Mikrocontroller integriert. Aus diesen Gründen ist bei einer solchermaßen ausgebildeten elektrischen/elektronischen Einrichtung eine über den ursächlich vorgesehenen Funktionsumfang hinausgehende Funktionserweiterung nur mit erheblichem Aufwand zu bewerkstelligen. Oftmals werden heutzutage jedoch von den Anwendern solcher elektrischen/elektronischen Einrichtungen flexible Änderungs- bzw. Erweiterungsmöglichkeiten erwartet, um auch für zukünftige, gegebenenfalls noch nicht im einzelnen bekannte Funktionsumfänge gerüstet zu sein.

Ausgehend von einer solchen Ausbildung liegt deshalb der vorliegenden Erfindung die Aufgabe zugrunde, eine elektrische/elektronische Einrichtung zu schaffen, bei der auf einfache Art und Weise eine über den ursächlichen Funktionsumfang erheblich hinausgehende Funktionserweiterung besonders kostengünstig zu bewerkstelligen ist.

Erfindungsgemäß wird die Aufgabe durch die im kennzeichnenden Teil des Hauptanspruches angegebenen Merkmale gelöst.

Besonders vorteilhaft bei einer derartigen Ausgestaltung ist, dass der Anwender lediglich die Chipkarte in die Leseeinrichtung einbringen muss, damit das darauf befindliche neue Programm bzw. Zusatzprogramm zur gewünschten Funktionserweiterung in den Programmspeicher eingelesen wird. Der Anwender ist also in der Lage eine Funktionserweiterung schnell und kostengünstig ohne fremde Hilfe durchzuführen. Die für die Speicherung des auf der Chipkarte befindlichen Programms bzw. Zusatzprogramms notwendige Speicherkapazität steht Vorteilhafterweise von vorne herein schon mit dem ursprünglich eingebauten Programmspeicher zur Verfügung.

Außerdem ist es besonders vorteilhaft, sollte zu einem späteren Zeitpunkt ein Programmspeicher mit noch größerer Speicherkapazität benötigt werden, z. B. um ein besonders großes Funktionserweiterungsprogramm, ein gänzlich neues Funktionsprogramm usw. abspeichern zu können, lässt sich dieser aufgrund der als Steckplatz ausgebildeten Schnittstelle besonders leicht austauschen bzw. um einen zusätzlichen Programmspeicher ergänzen, wobei gegebenenfalls gleichzeitig auch der Mikrocontroller mit ausgetauscht werden kann.

Weitere vorteilhafte Ausgestaltungen des erfindungsgemäßen Gegenstandes sind in den Unteransprüchen angegeben und werden anhand eines in den Zeichnungen dargestellten Ausführungsbeispieles näher erläutert. Dabei zeigen:

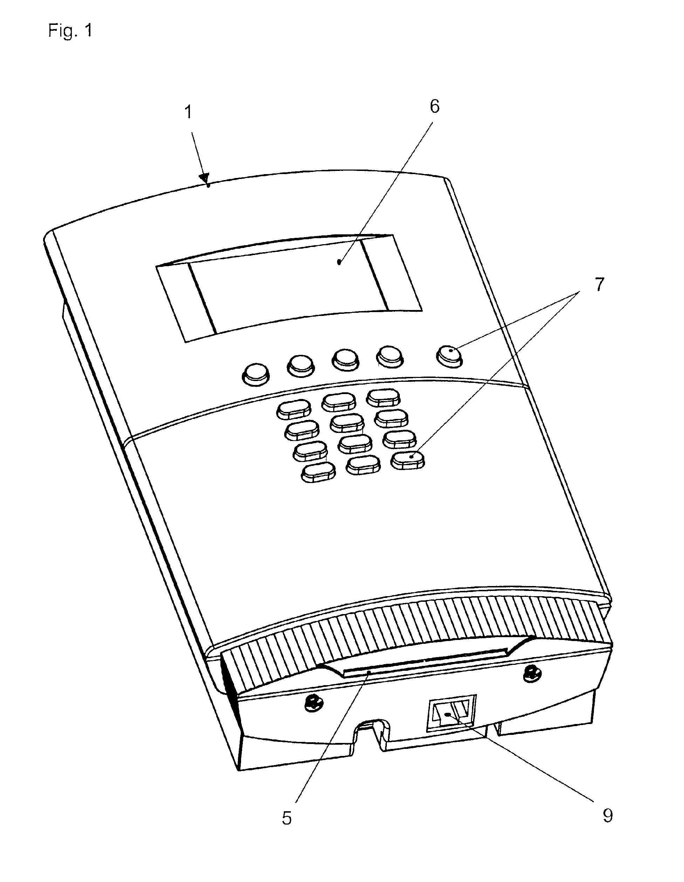

Fig. 1: prinziphaft eine solche Einrichtung in räumlicher Darstellung;

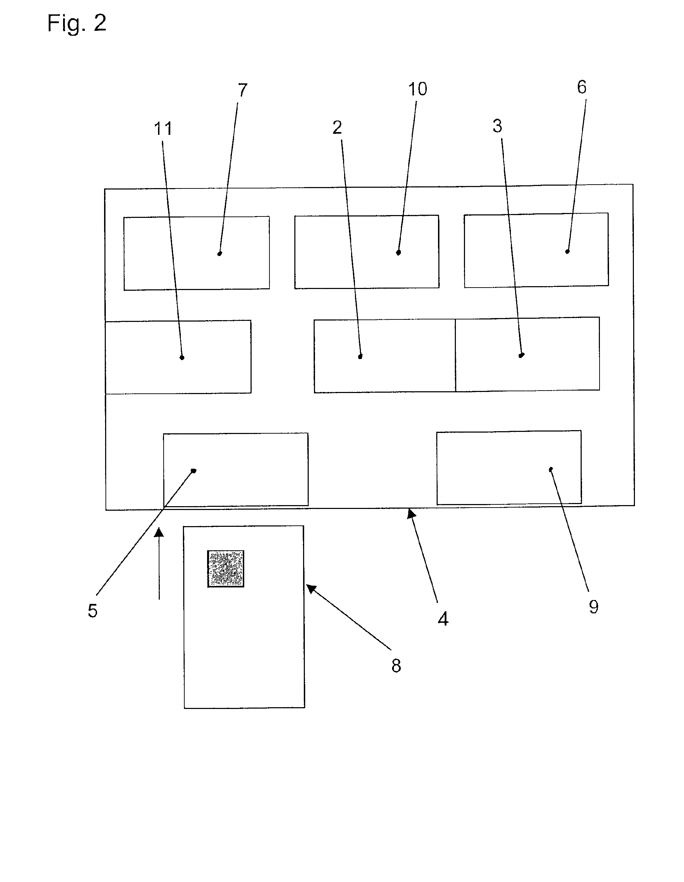

Fig. 2: ein Blockschaltbild einer Einrichtung gemäß Fig. 1;

Wie aus den Figuren hervorgeht, besteht eine solche Einrichtung im wesentlichen aus einem Gehäuse 1 in dem eine, zumindest einen Mikrocontroller 2 und einen Programmspeicher 3 aufweisende, Schaltungsanordnung 4 sowie eine von außen zugängliche Chipkartenleseeinrichtung 5 untergebracht sind. Außenseitig ist eine als LC-Display ausgeführte Anzeigevorrichtung 6 vorhanden, unterhalb welcher siebzehn Bedienelemente 7 einer Tastatur angeordnet sind.

Der auf der Schaltungsanordnung 4 vorhandene Programmspeicher 3 besitzt eine erheblich größere Speicherkapazität als dies für die Sicherstellung des einwandfreien Betriebes bei normalem Funktionsumfang notwendig ist. Aus diesem Grunde ist sichergestellt, dass ohne weiteres die Speicherung von Programmen bzw. Zusatzprogrammen zur Erweiterung bzw. Änderung des ursprünglichen Funktionsumfanges zu einem beliebigen Zeitpunkt durchführbar ist. Solche Funktionserweiterungen bzw. -änderungen werden häufig vom Anwender einer solchen elektrischen/elektronischen Einrichtung zu einem späteren Zeitpunkt gewünscht, wenn z. B. die seinerzeit ursprünglich vorgenommene Installation ergänzt bzw. erweitert werden soll. Aufgrund einer solchen Konzeption der elektrischen/elektronischen Einrichtung ist es jedoch genauso gut möglich, diese mit einem gestaffelten, also einem entsprechend vom Anwender gewünschten Funktionsumfang auszuliefern, ohne dass an der elektrischen/elektronischen Einrichtung hardwaremäßige Änderungen vorgenommen werden müssen. Lediglich durch das Einlesen des auf einer Chipkarte 8 vorhandenen, den Wünschen entsprechenden Programms bzw. Zusatzprogramms, wird der Funktionsumfang bzw. die Funktionsumfangserweiterung bestimmt. Auf besonders einfache, sowie kostengünstige Art und Weise ist somit eine solche elektrische/elektronische Einrichtung auf die speziellen Bedürfnisse des Anwenders zuschneidbar. Dies ist der Fall, weil die Einrichtung ausgehend von einem die grundsätzlichen Funktionen, wie z. B. die Licht- und die Jalousiesteuerung abdeckenden Grundprogrammes durch neu bzw. zusätzlich aufzuspielende Programme bzw. Zusatzprogramme, welche zusätzlich z. B. die Heizungsregelung und die Gebäudesicherheitstechnik abdecken, beliebig erweiterbar bzw. aufrüstbar ist.

Um eine missbräuchliche Anwendung von Chipkarten 8 zur Änderung des Funktionsumfanges der Einrichtung zu unterbinden, ist auf jeder Chipkarte 8 eine spezifische elektronische Kennzeichnung abgelegt, die vor ihrer Akzeptierung durch die Chipkartenleseeinrichtung 5 mit einer im Mikrocontroller 2 abgelegten elektronischen Abfragekennung in Vergleich gebracht wird. Außerdem ist die auf der Chipkarte 8 abgelegte elektronische Kennzeichnung verschlüsselt. Wirkungsvoll ist somit eine missbräuchliche Verwendung von Chipkarten 8 z. B. zum Zwecke der Sabotage, zum unlizenzierten Gebrauch usw. verhindert.

Sollte jedoch ein Programmspeicher mit noch größerer Speicherkapazität notwendig sein, um z. B. ein besonders großes Zusatzprogramm oder ein besonders großes, gänzlich neues Programm abspeichern zu können, ist auch dies besonders einfach und kostengünstig möglich, weil die - der Einfachheit halber nicht näher dargestellte-Schnittstelle auf der Schaltungsanordnung 4 als Steckplatz ausgeführt ist. Durch einfaches Aufstecken eines zusätzlichen Programmspeichers oder das Austauschen des vorhandenen Programmspeichers 3 durch einen neuen Programmspeicher mit größerer Speicherkapazität lässt sich eine notwendige Erweiterung mühelos realisieren. Sollte gegebenenfalls der Austausch des Mikrocontrollers 2 notwendig werden, ist dies ebenfalls aufgrund der als Steckplatz ausgeführten Schnittstelle auf einfache Art und Weise möglich.

Um bei Bedarf auf einfache Art und Weise auch eine Hardwareerweiterung realisieren zu können, steht der Programmspeicher 3 über die Schaltungsanordnung 4 und den Mikrocontroller 2 mit einer von außen zugänglichen, als Westernbuchse ausgebildeten Steckverbinderkupplung 9 in Verbindung. Über diese Steckverbinderkupplung 9 lässt sich gegebenenfalls einfach über eine Verbindungsleitung eine zusätzliche elektrische/elektronische Einrichtung anschließen. Bei Bedarf kann auch ein Buskoppelgerät direkt in die Steckverbinderkupplung 9 eingesteckt werden, wodurch der Anschluss unterschiedlicher Bussysteme wie LAN, EIB, LON usw. der Gebäudesystemtechnik einfach möglich ist. Durch diese multifunktionale Anschlussmöglichkeit ergibt sich eine universelle Verwendungsmöglichkeit einer solchen Einrichtung im Rahmen der Gebäudesystemtechnik.

Damit die zentrale Bedienung und/oder Steuerung bzw. Regelung einer Vielzahl von Geräten und Komponenten der Gebäudesystemtechnik wie z. B. Dimmer, Schalter, Temperaturregelventile, Rollosteuergeräte, Brandmelder, Einbruchmelder usw. sowohl leitungsungebunden als auch leitungsgebunden erfolgen kann, ist die elektrische/elektronische Einrichtung sowohl mit einer Funksende-/ Funkempfangseinrichtung 10 als auch mit einem Buskoppler 11 zum Anschluss der Busleitungen der vorhandenen Installation ausgerüstet. Für die Busanbindung wird in erster Linie standardmäßig das Bussystem EIB unterstützt. Selbstverständlich ist die elektrische/elektronische Einrichtung über einen entsprechenden - der Einfachheit halber nicht dargestellten - Anschluss an die Spannungsversorgung der jeweils vorliegenden Installation der Gebäudesystemtechnik anschließbar.

## Patentansprüche

1. Elektrische/elektronische Einrichtung zur zentralen Bedienung und/oder Steuerung bzw. Regelung einer Vielzahl von Geräten und Komponenten der Gebäudesystemtechnik wie z. B. Dimmer, Schalter, Temperaturregelventile, Rollosteuergeräte usw. welche ein Gehäuse aufweist, in dessen Innenraum die zur Bedienung, Steuerung bzw. Regelung notwendige, zumindest einen Mikrocontroller und einen Programmspeicher aufweisende, elektrische/elektronische Schaltungsanordnung und eine von außen zugängliche Chipkartenleseeinrichtung untergebracht sind und wobei diese außenseitig zumindest eine Anzeigevorrichtung sowie mehreren Bedienelemente aufweist, **dadurch gekennzeichnet, dass** der Programmspeicher (3) eine erheblich größere, als für die Sicherstellung des einwandfreien Betriebes bei normalem Funktionsumfang notwendige Speicherkapazität aufweist, welcher datentechnisch mit der Chipkartenleseeinrichtung (5) und dem Mikrocontroller (2) in Verbindung steht, und dass zumindest ein Teil des zu einem erweiterten Funktionsumfang notwendigen neuen Programms bzw. Zusatzprogramms auf einer Chipkarte (8) abgelegt und über die Chipkartenleseeinrichtung (5) in den Programmspeicher (3) übertragbar ist.

2. Elektrische/elektronische Einrichtung nach Anspruch 1, **dadurch gekennzeichnet, dass** der Programmspeicher (3) über die Schaltungsanordnung (4) und den Mikrocontroller (2) mit einer von außen zugänglichen Steckverbindungskupplung (9) in Verbindung steht.

3. Elektrische/elektronische Einrichtung nach Anspruch 1 oder 2, **dadurch gekennzeichnet, dass** der Programmspeicher (3) direkt von außen zugänglich angeordnet ist.

4. Elektrische/elektronische Einrichtung nach einem der Ansprüche 1 bis 3, **dadurch gekennzeichnet, dass** der Programmspeicher (3) über eine als Steckplatz ausgebildete Schnittstelle zumindest mit der Schaltungsanordnung (4) sowie mit der Chipkartenleseeinrichtung (5) in Verbindung steht.

5. Elektrische/elektronische Einrichtung nach einem der Ansprüche 1 bis 4, **dadurch gekennzeichnet, dass** zumindest ein Teil des Programmspeichers (3) in den Mikrocontroller (2) integriert ist.

6. Elektrische/elektronische Einrichtung nach einem der vorhergehenden Ansprüche, **dadurch gekennzeichnet, dass** die als Steckplatz ausgebildete Schnittstelle sowohl zur Aufnahme des Mirocontrollers (2) als auch zur Aufnahme des Programmspeichers (3) geeignet ist.

7. Elektrische/elektronische Einrichtung nach einem der Ansprüche 1 bis 6, **dadurch gekennzeichnet, dass** die Schaltungsanordnung (4) über eine entsprechende zweite Schnittstelle mit zumindest einer Funksende-/Funkempfangseinrichtung (10) in Verbindung steht.

8. Elektrische/elektronische Einrichtung nach einem der Ansprüche 1 bis 7, **dadurch gekennzeichnet, dass** die Schaltungsanordnung (4) über einen Buskoppler (11) mit zumindest einer Busleitung einer Installation der Gebäudesystemtechnik verbindbar ist.

9. Elektrische/elektronische Einrichtung nach einem der Ansprüche 1 bis 7, **dadurch gekennzeichnet, dass** auf jeder Chipkarte (8) eine spezifische elektronische Kennzeichnung abgelegt ist, die vor ihrer Akzeptierung durch die Chipkartenleseeinrichtung (5) mit einer im Mikrocontroller (2) abgelegten elektronischen Abfragekennung in Vergleich gebracht wird.

10. Elektrische/elektronische Einrichtung nach Anspruch 9, **dadurch gekennzeichnet, dass** die auf der Chipkarte (8) abgelegte elektronische Kennzeichnung verschlüsselt ist.
